# EUROPEAN PATENT APPLICATION

(11) **EP 4 447 154 A1**
(43) Date of publication of application: **16.10.2024**
(21) Application number: 22904704.8
(22) Date of filing: 09.12.2022
(51) Int. Cl.: H01M 4/36, H01M 4/587, H01M 10/0525, C01B 32/205, H01M 4/02

(54) **ANODE ACTIVE MATERIAL FOR LITHIUM SECONDARY BATTERY, PREPARING METHOD THEREOF, AND LITHIUM SECONDARY BATTERY COMPRISING SAME**

(30) Priority: 10.12.2021 KR 20210176508
(71) Applicant: Posco Future M Co., Ltd, Pohang-si, Gyeongsangbuk-do 37918 (KR)
(72) Inventor: KIM, Dae Sik, Cheonan-si, Chungcheongnam-do 31104 (KR); LEE, Heon Young, Cheonan-si, Chungcheongnam-do 31185 (KR); CHOI, Hyun Ki, Cheongju-si, Jeollabuk-do 28121 (KR); KO, Seunghyun, Cheonan-si, Chungcheongnam-do 31182 (KR); KIM, Ga Eun, Cheonan-si, Chungcheongnam-do 31120 (KR); JANG, Yeonghun, Cheonan-si, Chungcheongnam-do 31197 (KR); PARK, Hyeonggu, Busan 46595 (KR); HWANG, Da Yeoung Geul, Jeonju-si, Jeollabuk-do 54852 (KR)
(74) Representative: Meissner Bolte Partnerschaft mbB
(86) International application number: PCT/KR2022/019998
(87) International publication number: WO 2023/106875

(57) **Abstract**

One embodiment provides a negative active material for a lithium secondary battery, that includes a first graphite particle and a second graphite particle at a weight ratio of 80:20 to 95:5, and the particle diameter D50 of the second graphite particle is 80% or less of the particle diameter D50 of the first graphite particle. The lithium secondary battery containing the negative active material has excellent output characteristics and excellent productivity and economic efficiency.

## Description

### Field of the Invention

It relates to a negative active material for a lithium secondary battery, a manufacturing method thereof, and a lithium secondary battery containing the same.

### Description of the Related Art

Recently, high-capacity batteries are progressing due to the increase in power consumption due to higher performance and function integration of portable electronic devices such as portable phones and tablet PCs. High power sources are needed for power tools, particularly HEVs (hybrid vehicles) and EVs (electric vehicles), and accordingly, the need for rechargeable batteries with excellent high-power characteristics and discharge speeds is greatly increasing.

Additionally, as usage time increases, the charge/discharge cycle of the battery decreases, requiring a significant improvement in battery cycle. In addition, minimizing battery volume changes (expansion and contraction) due to degradation of battery materials is emerging as a major necessary characteristic.

Among secondary batteries, lithium secondary batteries are widely used due to their merits such as a high energy density and high voltage.

Commercial lithium secondary batteries generally use metal oxide-based positive active materials and carbon-based negative active materials such as graphite.

Graphite as a negative active material, is classified into a natural graphite mined, processed through physical selection and high purification, and an artificial graphite obtained by processing and high-temperature heat treatment of coke obtained by heat treatment of organic substances such as coal or petroleum residue.

In general, to manufacture artificial graphite negative electrode materials, pitch, which is a coal or petroleum-based residue or processed product, can be used through carbonization and high temperature heat treatment (graphitization) processes.

Depending on the application purpose, a composite negative electrode material made of a mixture of a natural graphite and an artificial graphite or a composite material mixed with heterogeneous coke graphite may be used to compensate for the drawbacks of both materials.

### SUMMARY OF THE INVENTION

One embodiment provides a negative active material with excellent output characteristics and excellent productivity and economic efficiency.

Another embodiment provides a manufacturing method of the negative active material.

Another embodiment provides a lithium secondary battery employing a negative electrode containing the negative active material.

One embodiment provides a negative active material for lithium secondary battery, comprising:
a first graphite particle and a second graphite particle with a weight ratio of 80:20 to 95:5, and a particle diameter D50 of the second graphite particle is less than 80% of a particle diameter D50 of the first graphite particle.

The first graphite particle may be a primary particle or secondary particle. The first graphite particle may be green coke or calcinated coke.

The pitch binder within the first graphite particle may be included from 3% to 20% for 100 wt% of the first graphite particle.

The particle diameter D50 of the first graphite particle may be 5 µm to 25 µm.

The second graphite particle may be wasted fine powder discharged during the negative active material manufacturing process.

Among the second graphite particles, the ratio of particles with a particle diameter D50 of 9 µm or less may be more than 10% of all the second graphite particles.

The span value (ratio of the difference between the D90 particle diameter and the D10 particle diameter to the D50 particle diameter ((D90-D10)/D50)) of the second graphite particle may be 0.9 or more.

The specific surface area (BET) of the second graphite particle may be more than 2.0 m²/g.

The specific surface area value for the span value (BET/span) of the second graphite particle may be 2 or more.

The tap density of the second graphite particle may be 0.20 g/cc to 0.90 g/cc.

The first graphite particle and second graphite particle may include a coating material selected from soft carbon, hard carbon, or a mixture thereof.

The coating material may be included at 0.1 to 10 wt% for 100 wt% of the first graphite particle and second graphite particle.

Another embodiment provides a manufacturing method for a negative active material, comprising:
producing a first graphite particle in the form of primary particle by pulverizing a carbon raw material and shaping into spherical shapes; producing a first graphite particle in the form of secondary particle by mixing the first graphite particle with a binder; carbonizing and graphitizing the first graphite particle in the form of the secondary particle; and manufacturing a negative active material by mixing the first graphite particle and the second graphite particle, which is waste fine powder generated from the pulverization and spherical shaping process, at a weight ratio of 80:20 to 95:5.

The carbon raw material may be any of coal-based needle calcinated coke, needle green coke, isostatic coke, or a combination thereof.

The binder may be a pitch binder.

In one embodiment, the first graphite particle and the second graphite particle may be coated with a coating material selected from soft carbon, hard carbon, or a mixture thereof.

The coating material may be included at 0.1 to 10 wt% for 100 wt% of the first graphite particle or second graphite particle.

Another embodiment provides a lithium secondary battery, comprising:
a positive electrode; a negative electrode containing a negative active material for a lithium secondary battery according to the embodiments and an electrolyte.

The negative active material of one embodiment has excellent output characteristics and has excellent productivity and economic efficiency because the negative active material is manufactured using waste fine powder generated during the production of the negative active material.

### DETAILED DESCRIPTION OF THE EMBODIMENTS

The advantages and features of the present invention, and methods for achieving them, will become clear by referring to the exemplary embodiments described in detail below along with the accompanying drawings. However, the present invention is not limited to the exemplary embodiments disclosed below and may be implemented in various different forms.

These embodiments are merely provided to ensure that the disclosure of the present invention is complete and to fully inform those skilled in the art of the present invention of the scope of the invention. The invention is defined only by the scope of the claims.

The same reference numerals refer to the same components throughout the specification.

Accordingly, in some exemplary embodiments, well-known techniques are not specifically described to avoid ambiguous interpretation of the present invention. Unless otherwise defined, all terms (including technical and scientific terms) used in this specification may be used with a meaning that can be commonly understood by a person of an ordinary skill in the technical field to which the present invention belongs.

In addition, unless explicitly described to the contrary, the word "comprise, contain, have, include", and variations such as "comprises" or "comprising", will be understood to imply the inclusion of stated elements but not the exclusion of any other elements. The singular also includes the plural, unless specifically stated in the phrase.

In this specification, D10, D50, and D90 particle diameter refers to the particle size when particles of various particle sizes are accumulated to 10%, 50%, and 90%, respectively, by volume ratio.

### A negative active material for a lithium secondary battery

One embodiment provides a negative active material for lithium secondary battery, comprising:
a first graphite particle and a second graphite particle with a weight ratio of 80:20 to 95:5, and a particle diameter D50 of the second graphite particle is less than 80% of a particle diameter D50 of the first graphite particle.

The first graphite particle may be a primary particle or a secondary particle, and in one embodiment, the first graphite particle may be a secondary particle.

In this specification, "primary particle" is in the form of a crystalline particle (crystallite particle) or grain. A plurality of primary particles forms grain boundaries and can agglomerate together to form secondary particles. "Secondary particle" includes plurality of primary particles. Additionally, secondary particles refer to particles that are not aggregates of other types of particles, or particles that are no longer agglomerated.

The first graphite particle may be green coke or calcinated coke, and in one embodiment, the first graphite particle may be a secondary particle, green coke or calcinated coke.

The "green coke (raw coke)" generally refers to manufacturing pitch, which is a coal or petroleum-based residue or processed product, through a coking reaction under high pressure and high temperature conditions. Specifically, it can be classified into the following types depending on the composition of the raw materials and coking process conditions. *Anisotropic or*

### needle coke with high carbon orientation in the uniaxial direction; or

### Isotropic or pitch coke with low carbon orientation

More specifically, "green" refers to a state obtained immediately after the coking process that has not been subjected to heat treatment such as calcination or carbonization and contains a certain percentage of volatilized components.

The green coke may include needle coke, isotropic coke, pitch coke or combinations thereof.

The "calcinated (calcination) coke" refers to a heat treatment product that removes volatilized components by calcination or carbonization of green coke.

The present invention uses green coke or calcinated coke as a negative active material, providing a negative active material for lithium secondary batteries with a low expansion rate and excellent output characteristics.

The pitch binder within the first graphite particle may be included from 3% to 20% for 100 wt% of the first graphite particle.

In one embodiment, the pitch binder in the first graphite particle is 3 wt% or more, 4 wt% or more, 5 wt% or more, 6 wt% or more, 7 wt% or more, or 8 wt% or more with respect to 100 wt% of the first graphite particle. , 9 wt% or more, 10 wt% or more, 11 wt% or more, 12 wt% or more, 13 wt% or more, 14 wt% or more, 15 wt% or more, 16 wt% or more, 17 wt% or more, 18 wt% or more, and 19 wt% or more or, 20 wt% or less, 19 wt% or less, 18 wt% or less, 17 wt% or less, 16 wt% or less, 15 wt% or less, 14 wt% or less, 13 wt% or less, 12 wt % or less, 11 wt% or less, 10 wt% or less, 9 wt% or less, 8 wt% or less, 7 wt% or less, 6 wt% or less, 5 wt% or less, and 4 wt% or less, in one embodiment. In the example, the pitch coke may contain 13 wt% for 100 wt% of the graphite.

Improvements in the output characteristic of the lithium secondary battery can be maximized in the wt% range of the pitch binder.

The diameter D50 of the first graphite particle may be 5 µm to 25 µm. Specifically, the diameter D50 of the first graphite particle may be 5 µm or more, 10 µm or more, 15 µm or more, and 20 µm or more, or 25 µm or less, 20 µm or less, 15 µm or less, and 10 µm or less.

The specific surface area (BET) of the first graphite particle may be 0.8 m²/g to 1.5 m²/g, for example, the specific surface area may be 1.0 m²/g to 1.5 m²/g, and the tap density may be 0.80. g/cc to 1.50 g/cc, for example, the tap density may be 0.80 g/cc to 1.20 g/cc.

The second graphite particle may be waste fine powder (dust) discharged during the negative active material manufacturing process.

In order to control the particle size of graphite particles during the negative active material manufacturing process, fine particles of unwanted particle size (usually small particle size particles) are discharged. At this time, the fines discharged refer to the above-mentioned waste fine powder. Originally, the waste fine powder was usually discarded because its particle size and shape were not appropriate.

In the present invention, rather than adding a separate material when manufacturing negative active material, negative active material can be manufactured by mixing the waste fine powder generated during the manufacturing process with the first graphite particles. Therefore, productivity is excellent and the cost of manufacturing negative active materials can be reduced, making it economical as well.

Additionally, since waste fine powder are mixed with the negative active material, the output characteristics of the battery can also be improved.

At this time, the particle diameter D50 of the second graphite particle is less than 80% of the particle diameter D50 of the first graphite particle, and in the particle diameter range, the output characteristic of the battery can be further improved.

Specifically, the particle diameter D50 of the second graphite particle is 16 µm or less, 15 µm or less, 14 µm or less, 13 µm or less, 12 µm or less, 11 µm or less, 10 µm or less, 9 µm or less, 8 µm or less, 7 µm or less. It may be 6 µm or less, 5 µm or less, 4 µm or less, 3 µm or less, 2 µm or less, or 1 µm or less. In one embodiment, the ratio of particles with a particle diameter D50 of 9 µm or less among the second graphite particles may be 10% or more of all the second graphite particles. Since it contains more than 10% of second graphite particles with a particle diameter of 9 µm or less, the specific surface area of the second graphite particles is wide, and through this, the battery characteristic can be improved.

Accordingly, the specific surface area (BET) of the second graphite particle may have a wide specific surface area of 2.0 m²/g or more, for example, the specific surface area may be 2.0 m²/g or more, 2.5 m²/g or more, 3.0 m²/g or more, 3.5 m²/g or more, 4.0 m²/g or more, or 4.5 m²/g or more.

In one implementation, the span value of the second graphite particle may be 0.9 or more.

The span value refers to a value obtained by using the calculation formula of (D90-D10)/D50 using D10, D50, and D90, which are indicators of particle size. Specifically, it means the ratio of the difference between the D90 particle size and the D10 particle size to the D50 particle size ((D90-D10)/D50).

If the span value of the second graphite particle is less than 0.9, the production yield is greatly reduced in order to industrially process powders with very small particle size deviation, which may increase costs and reduce productivity and economic feasibility. In addition, the porosity between powders is relatively low, which reduces the wettability of the electrolyte, which can cause problems such as a decrease in ion conductivity within the electrode and difficulties in constructing an electrode with high tap density.

In one embodiment, the specific surface area value for the span value (BET/span) of the second graphite particle may be 2 or more, and in the range, the battery output characteristic may be further improved.

The tap density of the second graphite particle may be 0.20 g/cc to 0.90 g/cc, for example, the tap density may be 0.30 g/cc to 0.50 g/cc.

The first graphite particle and second graphite particle can have a high degree of graphitization due to increased crystallinity of carbon. Specifically, d₀₀₂, which represents the spacing of crystal planes in XRD analysis, may be 3.354 to 3.365 Å, specifically 3.360 to 3.365 Å. Additionally, in XRD analysis, the lattice constant Lc may be 200 to 1,000 Å, specifically 400 to 800 Å. Additionally, in XRD analysis, the lattice constant Lₐ may be 700 to 2,000 Å, specifically 1,300 to 2,000 Å. With d₀₀₂ values, L_{c}, and Lₐ values in the range, the first graphite particle and second graphite particle can exhibit a high degree of graphitization.

The first graphite particle and second graphite particle may include a coating material selected from soft carbon, hard carbon, or a mixture thereof. The coating material covers the graphite, improving the stability of the graphite and further improving battery characteristics. In one embodiment, the coating material may be a petroleum-based pitch.

The softening point of the coating material may be above 200°C, above 210°C, above 220°C, above 230°C, above 240°C, or above 250°C.

The coating material may be included at 0.1 to 10 wt% for 100 wt% of the first graphite particle or second graphite particle.

The particle diameter D50 of the first graphite particle containing the coating material may be 5 µm to 30 µm, and the particle diameter D50 of the second graphite particle containing the coating material may be 16 µm or less.

The specific surface area (BET) of the first graphite particle containing the coating material can be 0.8 m²/g to 1.5 m²/g. For example, the specific surface area could be 1.0 m²/g to 1.5 m²/g. The specific surface area (BET) of the second graphite particle containing the coating material can be as large as 2.0 m²/g or more. For example, the specific surface area may be greater than 2.0 m²/g, greater than 2.5 m²/g, greater than 3.0 m²/g, greater than 3.5 m²/g, greater than 4.0 m²/g, or greater than 4.5 m²/g.

The tap density of the first graphite particle containing the coating material may be 0.80 g/cc to 1.00 g/cc, and the tap density of the second graphite particle containing the coating material may be 0.30 g/cc to 0.50 g/cc.

The first graphite particle and second graphite particle containing the coating material can have a high degree of graphitization due to increased crystallinity of carbon. Specifically, d₀₀₂, which represents the spacing of crystal planes in XRD analysis, may be 3.360 to 3.365 Å. Additionally, in XRD analysis, the lattice constant Lc may be 400 to 1,000 Å, specifically 500 to 800 Å. Additionally, in XRD analysis, the lattice constant Lₐ may be 800 to 2,000 Å, specifically 1,200 to 2,000 Å. With d₀₀₂ values, L_{c}, and Lₐ values in the range, the first graphite particle and second graphite particle containing the coating material can exhibit a high degree of graphitization.

### A manufacturing method of a negative active material for a lithium

### secondary battery

Another embodiment provides a manufacturing method for a negative active material, comprising:
producing a first graphite particle in the form of primary particle by pulverizing a carbon raw material and shaping into spherical shapes; producing a first graphite particle in the form of secondary particle by mixing the first graphite particle with a binder; carbonizing and graphitizing the first graphite particle in the form of the secondary particle; and manufacturing a negative active material by mixing the first graphite particle and the second graphite particle, which is waste fine powder generated from the pulverization and spherical shaping process, at a weight ratio of 80:20 to 95:5.

The carbon raw material may be any of coal-based needle calcinated coke, needle green coke, isostatic coke, or a combination thereof.

Carbon raw materials can be pulverized and manufactured into primary particle form. At this stage, the pulverizer may use, but is not limited to, a jet-mill, roller mill, or a general continuous or batch pulverizer capable of pulverizing and simultaneously air classification.

Secondary particles can be manufactured by mixing first graphite particles in the form of primary particles and binder.

In one embodiment, secondary particles can be manufactured by mixing the first graphite particle in the form of the primary particle and a binder and using shear force through a hot kneading process. At this time, the binder may be a pitch binder.

The pitch may be a coal-based material, such as coal tar, or a petroleum-based material.

Additionally, the softening point of the binder can be 80 to 300°C.

If the softening point is less than 80°C, the binding force is low, making it difficult to smoothly bond between primary particles and form secondary particles, and the carbonization yield is low, making it difficult to implement an economical manufacturing process. On the other hand, if the softening point exceeds 300°C, the operating temperature of the equipment for fusion of binder material increases. This increases equipment manufacturing costs. In addition, the use of high temperatures may cause problems with thermal denaturation and carbonization of some samples.

The wt% of the binder may be 5% to 15% based on 100 wt% of the first graphite particle in the form of the primary particle.

Specifically, if it is less than 5 wt%, the binding effect may be small and smooth secondary particle formation may not be achieved, and the binding force between primary particles within secondary particles may be reduced, which may cause problems of easy micronation during powder processing processes such as grinding. On the other hand, if it exceeds 15 wt%, the content of graphite derived from the binder is relatively high, which may reduce the capacity of the first graphite particle. In addition, the specific surface area increases due to the high pore content generated during thermal decomposition, which may reduce battery efficiency.

The step of manufacturing secondary particles by mixing primary particles and binder can be performed above the softening point of the binder.

In one embodiment, mixing to produce secondary particles can be performed at room temperature by placing primary particles and pitch binder into equipment that can mix them into a high-viscosity paste-type mixture at high temperature. At this time, a chamber can be maintained above 30°C compared to the softening point of the pitch binder. As a result, the pitch binder is sufficiently softened to have fluidity and smooth and uniform mixing can be achieved.

For example, the step of manufacturing the secondary particle can be performed for 1 hour to 5 hours after mixing the first graphite particle in the form of the primary particle and the pitch binder and reaching a predetermined temperature.

If the reaction is carried out for less than 1 hour, uniform mixing of the pitch binder and primary particles may be difficult, and if it is carried out for more than 5 hours, denaturation (oxidation and heat denaturation) of the pitch binder occurs due to excessive overheating, resulting a problem that the battery characteristic decreases.

In one embodiment, the first graphite particle in the form of a secondary particle and the second graphite particle, which is a waste fine powder produced in the first graphite particle manufacturing process in the form of a primary particle, may be coated with a coating material selected from soft carbon, hard carbon, or a mixture thereof. The coating material covers the graphite, improving the stability of the graphite and further improving battery characteristics. In one embodiment, the coating material may be a petroleum-based pitch.

The softening point of the coating material may be above 200°C, above 210°C, above 220°C, above 230°C, above 240°C, or above 250°C.

The covering material may be included at 0.1 to 10 wt% for 100 wt% of the first graphite particle or second graphite particle.

Afterwards, the first graphite particle and the second graphite particle are carbonized. The carbonization can be carried out in a non-oxidative atmosphere and in the 800 to 1,500°C range for 1 to 3 hours.

At this time, the temperature increase speed to the temperature can be 5 to 20 °C/min, and structural changes can be minimized by slowly increasing the temperature at the speed.

Afterwards, the carbonized first graphite particle and second graphite particle are graphitized.

In one embodiment, graphitization may be carried out at a temperature of 2,800 to 3,200°C for 1 hour to 3 hours, and at this time, the temperature may be raised at the same speed to maintain the structure in the carbonization stage, but is limited thereto.

Additionally, the graphitization step can be performed in an inert atmosphere. For example, it may be performed in a nitrogen, argon, or helium gas atmosphere, but is not limited thereto.

Afterwards, a negative active material is manufactured by mixing the graphitized first graphite particles and second graphite particles at a weight ratio of 70:30 to 99:1. The manufactured negative active material has the same characteristics as the negative active material for the lithium secondary battery described above and improves the output characteristic of the battery.

In another embodiment of the present invention, a lithium secondary battery is provided, including a positive electrode, a negative electrode, and an electrolyte, where the negative electrode includes a negative active material manufactured by the method described above.

The characteristics of the negative active material and the resulting lithium secondary battery are as described above. Additionally, except for the negative active material, the remaining battery configuration is generally known. Therefore, detailed description will be omitted.

### DETAILED DESCRIPTION OF THE EMBODIMENTS

Hereinafter, it will be described in detail through exemplary embodiments. However, the exemplary embodiment below merely exemplifies the present invention, and the content of the present invention is not limited by the exemplary embodiment below.

### Exemplary embodiment 1

### (1) Manufacturing of negative active material

As a carbon raw material, green coke (VM content about 5.0 wt%), as a coal-based premium needle coke product, was pulverized, shaped into spherical shape, and calcinated to produce calcinated coke in the form of primary particles. 13% by weight of pitch with a softening point of 250°C was mixed with 100% by weight of the calcined coke in the form of primary particles prepared above. Afterwards, secondary particles were prepared by mixing for 2 hours using a heatable mixing mixer. At this time, the particle diameter D50 of the secondary particle was 13.2µm.

The calcinated coke in the form of secondary particles; and the waste fine powder generated during the grinding and spherical shaping process; were carbonized in a nitrogen atmosphere at 1,200°C for 1 hour. Afterwards, the temperature was raised to 3,000°C and graphitized for 1 hour to obtain first graphite particles (calcinated coke secondary particles) and second graphite particles (waste fine powder).

The obtained second graphite particle was coated with 3 wt% of soft carbon using 100 wt% of the second graphite particle as a reference.

Afterwards, the first graphite particle and the second graphite particle were mixed at a weight ratio of 90:10 and micronized to obtain a negative active material.

### (2) Manufacturing of lithium secondary batteries

A negative active material slurry was prepared by mixing 95.6 wt% of the negative active material prepared in the (1), 1.1 wt% of carboxy methyl cellulose, 2.3 wt% of binder containing styrene butadiene rubber, and 1 wt% of Super P conductive material in distilled water solvent.

The negative active material slurry was applied to the copper (Cu) current collector, dried at 80°C for 10 minutes, and compressed in a roll press. Afterwards, a negative electrode was prepared by vacuum-drying in a 120°C vacuum oven for 12 hours. After vacuum-drying, the electrode density of the negative electrode was set to 1.6 g/cc.

Lithium metal was used as the counter electrode, and as the electrolyte solution, a solution that 1 mole of LiPF₆ dissolved in a mixed solvent with a volume ratio of 1:1 ethylene carbonate (EC):dimethyl carbonate (DMC) was used.

Using each component, a half-cell of the 2032 coin cell type was manufactured according to a typical manufacturing method.

### Exemplary embodiment 2

A half-cell was manufactured using the same method as exemplary embodiment 1, except that the first graphite particle and the second graphite particle were mixed at a weight ratio of 95:5.

### Exemplary embodiment 3

A half-cell was manufactured using the same method as exemplary embodiment 1, except that the first graphite particle and the second graphite particle were mixed at a weight ratio of 85:15.

### Comparative Example 1

A half-cell was manufactured using the same method as exemplary embodiment 1, except that only the first graphite particle without mixing the second graphite particle was used as a negative active material.

### Comparative Example 2

A half-cell was manufactured using the same method as exemplary embodiment 1, except that only the second graphite particle without mixing the first graphite particle was used as a negative active material.

### Experimental Example 1: Graphite degree analysis of negative active material

To evaluate the graphitization degree of the artificial graphite negative electrode material manufactured in the exemplary embodiment and Comparative Example, the results of X-ray diffraction (XRD) analysis are shown in the following Table 1.
XRD analysis was performed under the following conditions.
slit condition: Divergence Silt, Scattering Slit 0.5°, Receiving Slit 0.15mm
X-ray wavelength: 1.541838 Å (Cu Kαm)
scan condition: 0.02 step, 1°/min

**(Table 1)**

| | d₀₀₂ | La | Lc | La/Lc |
|---|---|---|---|---|
| exemplary embodiment 1 | 3.361 | 1713.17 | 663.75 | 2.59 |
| exemplary embodiment 2 | 3.360 | 1827.62 | 698.79 | 2.65 |
| exemplary embodiment 3 | 3.361 | 1810.83 | 682.61 | 2.61 |
| Comparative Example 1 | 3.361 | 1805.93 | 715.16 | 2.80 |
| Comparative Example 2 | 3.361 | 1455.92 | 517.18 | 2.82 |

In the Table 1, d₀₀₂ represents the spacing of crystal planes in XRD analysis, and L_{c} and Lₐ represent lattice constants in XRD analysis. At this time, the smaller d₀₀₂ and the larger the Lₐ value, the higher the degree of graphitization, and the smaller the Lₐ/L_{c} value, the more advantageous the rapid charge characteristic.

Through the Table 1, it can be seen that the negative active material of the exemplary embodiment has the same level of graphitization as the Comparative Example and has a small Lₐ/L_{c} value, which is advantageous for rapid charging.

### Experimental Example 2: Measurement of initial discharge capacity and efficiency of lithium secondary battery (Half-cell)

Previously, the final active material obtained in the exemplary embodiment and comparative example was tested by applying it to a half-cell.

Specifically, the battery was operated under 0.1C, 5mV, 0.005C cut-off charge, and 0.1C 1.5V cut-off discharge conditions, and the initial discharge capacity and initial efficiency values were recorded in Table 2.

**(Table 2)**

| | Discharge capacity (mAh/g) | Efficiency (%) |
|---|---|---|
| exemplary embodiment 1 | 354.3 | 92.3 |
| exemplary embodiment 2 | 355.7 | 92.6 |
| Comparative Example 1 | 351.2 | 92.4 |
| Comparative Example 2 | 348.1 | 87.8 |

As can be seen in the Table 2, the batteries of exemplary embodiments 1 and 2 have excellent charge and discharge efficiency, but have larger capacities compared to Comparative Examples 1 and 2, and the charge and discharge efficiency of exemplary embodiment 2 is particularly good compared to that of exemplary embodiments and Comparative Examples.

### Experimental Example 3: Measurement of voltage value at predetermined SOC (%) of lithium secondary battery (Half-cell)

The active materials finally obtained in Exemplary Embodiment 3 and Comparative Examples 1 and 2 were applied to half-cell and tested.

After stabilizing the battery (formation) and charging it to SOC (State of Charge, when charging and discharging the battery at 3.0V to 4.5V, when the entire battery charge capacity is set to 100%, the battery is charged to 10, 20, 30, and 40% charge capacity, respectively) of 10, 20, 30, and 40% in one cycle, the average voltage value was measured using charger/discharger equipment.

The results are shown in the following Table 3.

**(Table 3)**

| SOC (%) | average voltage value | negative active material | #1 | #2 | #3 | #4 | #5 |
|---|---|---|---|---|---|---|---|
| 10 | -0.043 | exemplary embodiment 3 (first graphiteparticle 85% + second graphite particle 15°,6) | -0.051 | -0.040 | -0.035 | -0.053 | -0.036 |
| | -0.036 | Comparative Example 1 (first graphiteparticle 100%) | -0.047 | -0.028 | -0.036 | -0.034 | |
| | -0.067 | Comparative Example 2 (second graphiteparticle 100%) | -0.064 | -0.061 | -0.075 | | |
| 20 | -0.094 | exemplary embodiment 3 (first graphiteparticle 85% + second graphiteparticle 15°,6) | -0.105 | -0.097 | -0.099 | -0.114 | -0.093 |
| | -0.102 | Comparative Example 1 (first graphiteparticle 100%) | -0.104 | -0.088 | -0.096 | -0.088 | |
| | -0.122 | Comparative Example 2 (second graphiteparticle 100%) | -0.117 | -0.117 | -0.130 | | |
| 30 | -0.125 | exemplary embodiment 3 (first graphiteparticle 85% + second graphiteparticle 15°,6) | -0.140 | -0.130 | -0.130 | -0.149 | -0.122 |
| | -0.135 | Comparative Example 1 (first graphiteparticle 100%) | -0.137 | -0.118 | -0.126 | -0.118 | |
| | -0.161 | Comparative Example 2 (second graphiteparticle 100%) | -0.156 | -0.156 | -0.169 | | |
| 40 | -0.152 | exemplary embodiment 3 (first graphiteparticle 85% + second graphiteparticle 15°,6) | -0.168 | -0.158 | -0.159 | -0.161 | -0.149 |
| | -0.159 | Comparative Example 1 (first graphiteparticle 100%) | -0.164 | -0.146 | -0.151 | -0.145 | |
| | -0.174 | Comparative Example 2 (second graphiteparticle 100%) | -0.174 | -0.171 | -0.177 | | |

As can be seen in the Table 3, the half-cell containing the negative active material of exemplary embodiment 3 showed excellent rate characteristics.

The exemplary embodiments described above should be understood in all respects as illustrative and not limiting. The scope of the present invention is indicated by the claims described below rather than the detailed description above, and all changes or modified forms derived from the meaning and scope of the claims and their equivalent concepts should be construed as being included in the scope of the present invention.

## Claims

1. A negative active material for lithium secondary battery, comprising:
a first graphite particle and a second graphite particle with a weight ratio of 80:20 to 95:5, and
a particle diameter D50 of the second graphite particle is less than 80% of a particle diameter D50 of the first graphite particle.

2. The negative active material of claim 1, wherein:
the first graphite particle is a primary particle or secondary particle.

3. The negative active material of claim 1, wherein:
the first graphite particle is green coke or calcinated coke.

4. The negative active material of claim 2, wherein:
a pitch binder in the first graphite particle is contained 3% to 20% for 100 wt% of the first graphite particle.

5. The negative active material of claim 1, wherein:
the particle diameter D50 of the first graphite particle is 5 µm to 25 µm.

6. The negative active material of claim 1, wherein:
the second graphite particle is waste fine powder discharged during the negative active material manufacturing process.

7. The negative active material of claim 1, wherein:
among the second graphite particles, a ratio of particles with a particle diameter D50 of 9 µm or less is more than 10% of all the second graphite particles.

8. The negative active material of claim 1, wherein:
a span value (ratio of the difference between the D90 particle diameter and the D10 particle diameter to the D50 particle diameter ((D90-D10)/D50)) of the second graphite particle is greater than or equal to 0.9.

9. The negative active material of claim 1, wherein:
the specific surface area (BET) of the second graphite particle is more than 2.0 m²/g.

10. The negative active material of claim 1, wherein:
the specific surface area value for the span value (BET/span) of the second graphite particle is 2 or more.

11. The negative active material of claim 1, wherein:
a tap density of the second graphite particle is 0.20 g/cc to 0.90 g/cc.

12. The negative active material of claim 1, wherein:
the first graphite particle and the second graphite particle contain a coating material selected from soft carbon, hard carbon, or a mixture thereof.

13. The negative active material of claim 12, wherein:
the covering material contains 0.1 to 10 wt% for 100 wt% of the first graphite particle and second graphite particle.

14. A manufacturing method for a negative active material, comprising:
producing a first graphite particle in the form of primary particle by pulverizing a carbon raw material and shaping into spherical shapes;
producing a first graphite particle in the form of secondary particle by mixing the first graphite particle with a binder;
carbonizing and graphitizing the first graphite particle in the form of the secondary particle; and
manufacturing a negative active material by mixing the first graphite particle and the second graphite particle, which is waste fine powder generated from the pulverization and spherical shaping process, at a weight ratio of 80:20 to 95:5.

15. The manufacturing method of claim 14, wherein:
the carbon raw material is any of coal-based needle calcinated coke, needle green coke, isotropic coke or a combination thereof.

16. The manufacturing method of claim 14, wherein:
the binder is a pitch binder.

17. The manufacturing method of claim 14, wherein:
the first graphite particle and the second graphite particle are coated with a coating material selected from soft carbon, hard carbon, or a mixture thereof.

18. The manufacturing method of claim 17, wherein:
the coating material contains 0.1 to 10 wt% for 100 wt% of the first graphite particle or second graphite particle.

19. A lithium secondary battery, comprising:
a positive electrode;
a negative electrode containing a negative active material for a lithium secondary battery according to any one of claim 1 to claim 13; and
an electrolyte.
